Europäisches Patentamt

European Patent Office

Office européen des brevets

(19)

(11) Veröffentlichungsnummer: **0 056 447**
**B1**

# EUROPÄISCHE PATENTSCHRIFT

(12)

(45) Veröffentlichungstag der Patentschrift:
02.10.85

(21) Anmeldenummer: 81109084.4

(22) Anmeldetag: 28.10.81

(51) Int. Cl.⁴: **G 01 C 19/38**

(54) Verfahren zum Ermitteln der Nordrichtung mittels eines nordsuchenden Kreisels.

(30) Priorität: 05.12.80 DE 3045823

(43) Veröffentlichungstag der Anmeldung:
28.07.82 Patentblatt 82/30

(45) Bekanntmachung des Hinweises auf die Patenterteilung:
02.10.85 Patentblatt 85/40

(84) Benannte Vertragsstaaten:
CH FR GB IT LI

(56) Entgegenhaltungen:
DE - A - 1 498 042
DE - A - 2 263 338
DE - A - 2 336 956
DE - A - 2 714 367
DE - B - 2 903 282
FR - A - 2 396 956
FR - A - 2 403 544
SU - A - 175 256
US - A - 3 518 771
US - A - 3 936 948
ARCHIV FÜR ELEKTROTECHNIK, Band 54, Nr. 2, 1971,
Heidelberg (DE) W. AUER: "Über einen neuartigen
nordsuchenden Kurskreisel" Seiten 102-107
Die Akte enthält technische Angaben, die nach dem
Eingang der Anmeldung eingereicht wurden und die
nicht in dieser Patentschrift enthalten sind.

(73) Patentinhaber: TELDIX GmbH, Grenzhöfer
Weg 36 Postfach 105608, D-6900 Heidelberg 1 (DE)

(72) Erfinder: Sindlinger, Rainer, Dipl.-Ing.,
Haagackerweg 18, D-6945 Hirschberg (DE)

(74) Vertreter: Kammer, Arno, Dipl.-Ing., TELDIX GmbH
Postfach 10 56 08 Grenzhöfer Weg 36,
D-6900 Heidelberg 1 (DE)

## Beschreibung

Die Erfindung betrifft ein Verfahren zur Ermittlung der Nordrichtung gemäß Oberbegriff des ersten Patentanspruchs.

Aus der DE-A-1 498 042 ist ein Kreisel und ein Verfahren bekannt, wobei der Kreisel grundsätzlich als ein Wendekreisel mit zwei Freiheitsgraden ausgebildet ist. Dieser enthält einen um eine möglichst vertikal ausgerichtete Drehachse drehbaren Rahmen mit einem Kreiselrotor, dessen Spinachse orthogonal zur genannten Drehachse bzw. Hochachse und somit in einer horizontalen Ebene liegt. Der Rahmen ist mittels Gaslagern drehbar in einem sogenannten Pendelkörper angeordnet, wobei dieser mittels Kardangelenk innerhalb eines Gehäuses derart aufgehängt ist, daß die vertikale Ausrichtung der Drehachse ermöglicht wird. Die derart ausgebildete Loteinrichtung enthält außerdem am unteren Ende des Pendelkörpers einen elektrisch betätigbaren Lotmagneten, dessen Anker nach Durchführung der Lotung sich auf einem kalottenförmigen Teil des Gehäuses abstützt. Der Rahmen ist bezüglich des Gehäuses an eine Nullstellung gefesselt. Es ist weiterhin ein Nachführkreis vorgesehen, enthaltend einen Abgriff für die Winkelstellung des Rahmens, geeignete Verstärkereinrichtungen und einen Stellantrieb zwischen Gehäuse und Pendelkörper, um eine Nachführung des Pendelkörpers im Sinne einer Verringerung des Rahmenabgriffsignales zu bewirken. Bei einem derartigen nordsuchenden Kreisel bewirkt bekanntlich die Horizontalkomponente der Erddrehgeschwindigkeit ein vom Sinus des Ablagewinkels der Drallachse zur Nordrichtung abhängiges nordtreibendes Moment, welches eine entsprechende Auslenkung des Rahmens verursacht. Mittels des Nachführkreises wird daher der Pendelkörper nachgeführt, bis die genannte Rahmenauslenkung gegen Null geht. Die mittels eines als Resolver ausgebildeten Winkelgebers erfaßte Winkelstellung des Pendelkörpers gegenüber dem Gehäuse entspricht dann im wesentlichen der Nordrichtung. Außer dem nordtreibenden Moment sind jedoch auch das Fesselmoment sowie Störmomente, verursacht insbesondere durch Kreiseldriften, die Rahmenlagerung, Stromzuführungen sowie von außen einwirkende Vibrationen zu berücksichtigen, so daß je nach Güte des Kreisels Nordungsfehler entstehen.

Es ist weiterhin aus der DE-A-2 336 956 ein nordsuchender Kreisel der genannten Art bekannt, bei welcher zunächst eine schnelle Nachführung in eine erste Stellung durchgeführt wird, in welcher die Kreiselspinachse grob in die Nordrichtung ausgerichtet ist. Nachfolgend wird der Nachführkreis aufgetrennt und in Abhängigkeit des Rahmenabgriffsignals ein zwischen Rahmen und Pendelkörper angeordneter Drehmomenterzeuger angesteuert. In dem derart ausgebildeten Fesselkreis entspricht der Strom des Drehmomenterzeugers dem Fesselmoment, so daß unter Berücksichtigung des Kreiseldralls die Eingangswinkelgeschwindigkeit und somit die vorhandene Nordablage bestimmt werden kann.

Hierbei werden geeignete Filter vorgesehen, um den Einfluß der zu erwartenden externen Störbewegungen zu begrenzen.

Es ist weiterhin zur Erfassung der Winkelstellung des Pendelkörpers gegenüber dem Gehäuse ein Winkelgeber vorgesehen, wobei aus dessen Signal und der Nordablage sich die Nordrichtung ergibt. Durch die Einschaltung des genannten Fesselkreises wird bei entsprechender Vorgabe des Übertragungsfaktors die dominante Eigenfrequenz des Kreisels erhöht, so daß der durch Gleichrichtmomente bedingte Nordfehler bzw. die Störbewegungsempfindlichkeit des Kreisels verringert wird.

Bei der Anwendung nordsuchender Kreisel, z. B. in Navigationsanlagen, ist es wünschenswert, die Restfehler, die durch konstante Störmomente, Temperatureinflüsse u. a. äußere Einflüsse sowie durch Skalenfaktorfehler entstehen, zu bestimmen, um sie bei der Berechnung des Nordwinkels berücksichtigen zu können. Diese bestimmbaren Fehler sollen möglichst bei jeder Nordmessung berücksichtigt und in bestimmten Zeitabständen überprüft und korrigiert werden können.

Der Erfindung liegt daher die Aufgabe zugrunde, ein Meßverfahren für einen nordsuchenden Kreisel derart zu gestalten, daß ein verbesserter Nordwinkel gewonnen wird und der Einfluß der genannten Störgrößen reduziert wird.

Diese Aufgabe wird durch die im ersten Patentanspruch angegebenen Merkmale gelöst.

Bei dem erfindungsgemäßen Nordungsverfahren ist es möglich, die durch die Größen Skalenfaktor K und Kreiseldrift D verursachten Nordungsfehler zu eliminieren und diese auch bei nachfolgenden, auf herkömmliche Weise durchgeführten Nordungen weitgehend zu reduzieren.

Aus den über einen bestimmten Meßzeitraum aufsummierten und gemittelten Ausgangsgrößen $\overline{X}_1$, $\overline{X}_2$, . . ., $\overline{X}_n$ erfolgt in vorteilhafter Weise die Bestimmung des Skalenfaktors K der gesamten Übertragungskette und eines Meßfehlers B, der die Abweichung der mittleren Ausgangsgröße $\overline{X}$ bei der Winkelgeschwindigkeit $\omega = 0$ um die Eingangsachse angibt.

In besonders einfacher Weise erhält man diese Werte, wenn die drei Messungen der Eingangswinkelgeschwindigkeit in 120° zueinander verdrehten Stellungen des Pendelkörpers durchgeführt werden. Nach Umformung der Eingangswinkelgeschwindigkeiten $\omega_1$, $\omega_2$, $\omega_3$ in die Ausgangsgrößen $\overline{X}_1$, $\overline{X}_2$, $\overline{X}_3$ wird die Nordrichtung bzw. der Winkel zwischen Nullmarke des Kreisels und Nord nach der Beziehung

$$\gamma = \arctan \frac{2\,\overline{X}_1 - \overline{X}_2 - \overline{X}_3}{(\overline{X}_2 - \overline{X}_3)\,\sqrt{3}} \tag{1}$$

gebildet. Aus dieser Gleichung ist ersichtlich, daß die Horizontalkomponente der Erddrehgeschwindigkeit $\Omega_H$ bei der Berechnung nicht berücksichtigt zu werden braucht und somit eine ungenaue Bestimmung bzw. falsche Eingabe des Standortes oder der geographischen Größe keine fehlerhafte Bestimmung der Nordrichtung verursachen kann.

Mittels den erhaltenen Ausgangsgrößen $\overline{X}_1$, $\overline{X}_2$, $\overline{X}_3$ kann ferner nach der Beziehung

$$K = \frac{2}{3\,\Omega_H} \sqrt{\overline{X}_1^2 + \overline{X}_2^2 + \overline{X}_3^2 - \overline{X}_1\overline{X}_2 - \overline{X}_2\overline{X}_3 - \overline{X}_1\overline{X}_3} \tag{2}$$

der Skalenfaktor ermittelt werden. Hierzu ist die Horizontalkomponente der Erdrotation $\Omega_H$ erforderlich. In umgekehrter Weise kann jedoch mit Hilfe dieser Beziehung bei einem aus vorherigen Messungen bekannten Skalenfaktor K der Wert $\Omega_H$ bestimmt werden.

Der konstante Meßfehler errechnet sich in diesem Verfahren nach der Beziehung

$$B = \frac{1}{3}(\overline{X}_1 + \overline{X}_2 + \overline{X}_3) . \tag{3}$$

Mittels der Gleichung

$$D = \frac{B}{K} \tag{4}$$

läßt sich die mittlere Kreiseldrift D ermitteln. Die erhaltenen Werte K, B, D sind konstante Faktoren und können bei nachfolgenden Messungen der Nordrichtung als typische Fehler berücksichtigt werden. Ein eventuell auftretender Temperaturgang der Elemente der Meßwertermittlung oder der Übertragung wird aus mehreren Messungen dieser genannten Größen bei bestimmten Temperaturen bestimmt und abgespeichert und ebenfalls bei der Auswertung nachfolgender Nordmessungen berücksichtigt.

Eine weitere vereinfachte Ermittlung der Nordrichtung und der Fehlergrößen wird bei einer Messung der Eingangswinkelgeschwindigkeit in vier um 90° zueinander verdrehten Stellungen des Pendelkörpers erreicht. Hierbei wird in vorteilhafter Weise eine Erhöhung der Genauigkeit und eine weitere Vereinfachung der Berechnung möglich. Die Nordrichtung wird ermittelt nach der Beziehung

$$\gamma = \arctan \frac{\overline{X}_1 - \overline{X}_3}{\overline{X}_2 - \overline{X}_4} . \tag{5}$$

Wahlweise können ferner die Größen K, B und D nach folgenden Gleichungen ermittelt werden:

$$K = \frac{1}{2\,\Omega_H} \sqrt{(\overline{X}_1 - \overline{X}_3)^2 + (\overline{X}_2 - \overline{X}_4)^2} \tag{6}$$

$$B = \frac{1}{4}(\overline{X}_1 + \overline{X}_2 + \overline{X}_3 + \overline{X}_4) \tag{7}$$

$$D = \frac{B}{K} . \tag{8}$$

Wird eine schnelle Bestimmung der Nordrichtung gewünscht, so kann während den laufenden Messungen nach dem Ermitteln der ersten beiden Ausgangsgrößen $\overline{X}_1$ und $\overline{X}_2$ ein erster Grobwert der Nordrichtung in Bezug auf die Nullmarke nach der Beziehung

$$\gamma_G = \arctan \frac{\overline{X}_1}{\overline{X}_2} \tag{9}$$

ermittelt werden.

In einer Ausbildung der Erfindung ist eine exakte mechanische Ausrichtung des Kreisels gegenüber der gehäusefesten Nullmarke, also eine Kalibration der mechanischen Kreisel-Komponenten dadurch möglich, daß die Nullmarke des Kreisels genau in die vorbekannte Nordrichtung eingestellt wird und mittels mehrerer Messungen die vom Kreisel angezeigte Nordrichtung ermittelt und aus der Differenz bzw. der Abweichung dieser Nordrichtung von der tatsächlichen Nordrichtung die Justierung des Kreisels vorgenommen oder ein Kalibrationswert Z berechnet wird. Dieser Kalibrationswert wird so abgespeichert, daß er bei nachfolgenden Nordmessungen zur Korrektur des Nordwinkels berücksichtigt werden kann, auch wenn ein anderes Nordungsverfahren angewandt wird.

Desgleichen ist mittels eines Speichers, z. B. in der Art eines digitalen Speicherbausteins (PROM) ein Abspeichern der Werte für Skalenfaktor, konstanter Meßfehler und Drift sowie deren Temperaturkoeffizienten möglich.

In bevorzugter Weise ist der Speicher, welcher alle Kalibrations- bzw. Fehlerwerte abspeichert, Bestandteil der Kreiselmechanik, so daß bei Austausch des Kreisels aus einer Navigationsanlage die abgespeicherten Werte als kreiselspezifische Werte erhalten bleiben.

Die Erfindung wird nachfolgend anhand des in der Zeichnung dargestellten Ausführungsbeispiels näher erläutert. Es zeigt

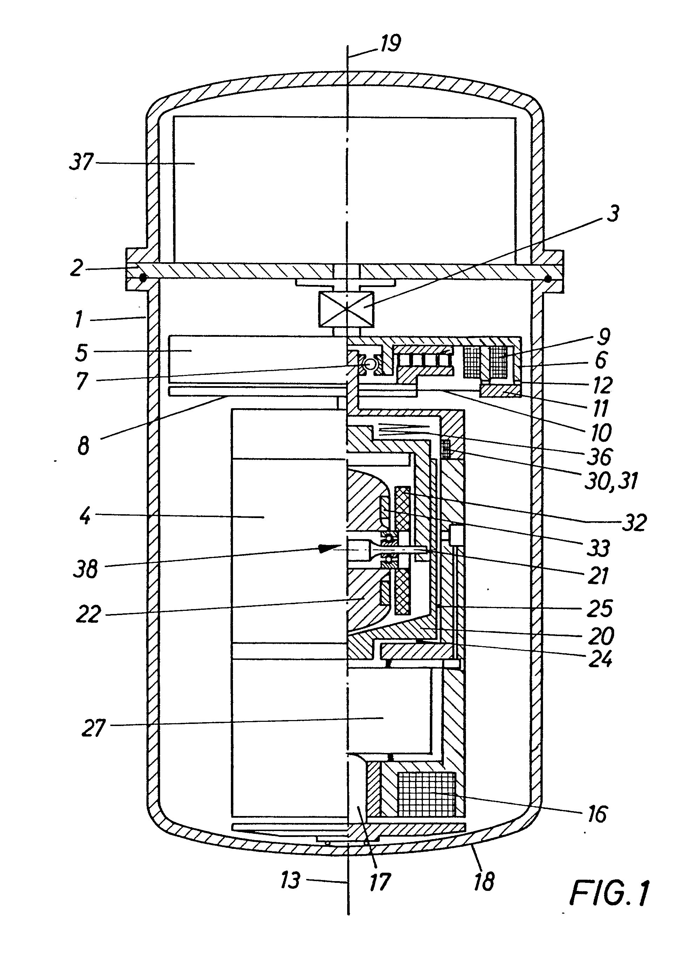

Fig. 1 — eine Prinzipdarstellung des nordsuchenden Kreisels teilweise im Längsschnitt.

Der nordsuchende Kreisel gemäß Fig. 1 enthält in einem Gehäuse 1 einen unter einer Grundplatte 2 an einem Kardangelenk 3 aufgehängten Pendelkörper 4. Zwischen dem schematisch dargestellten Kardangelenk 3 und dem Pendelkörper 4 ist ein als Taumelscheibenmotor ausgebildeter Schrittmotor 5 angeordnet. Der Schrittmotor enthält einen am Kardangelenk 3 befestigten Stator 6 sowie einen über ein Kugellager 7 drehbar angeordneten Rotor 8. Das Kugellager 7 dient gleichzeitig zur Lagerung des mit dem Rotor 8 verbundenen Pendelkörpers 4. Auf dem Stator 6 sind über den Umfang verteilt eine Anzahl von elektrischen Wicklungen 9 angeordnet. Der Rotor enthält einen mit dem Pendelkörper mittels einer axial nachgiebigen und radial steif angeordneten Taumelscheibe oder mittels einer Membran 10 verbundenen Zahnkranz 11, welchem auf dem Stator gegenüberliegend ein Zahnkranz 12 zugeordnet ist. Die Zahnkränze 11, 12 weisen eine hohe Zähnezahl auf, wobei die Zähnezahldifferenz vorzugsweise ein Zahn beträgt. Bei einem derartigen Schrittmotor kann die Schrittweite entsprechend der Zähnezahl und der Anzahl der Wicklungen 9 relativ grob gewählt werden, wobei trotzdem eine sehr hohe Teilungsgenauigkeit erreicht wird. Der Pendelkörper 4 kann somit um die Drehachse 13 über den gesamten Winkelbereich voll durchgedreht und mit hoher Genauigkeit eingestellt werden. Der Schrittmotor 5 dient gleichzeitig als Winkelgeber für die Stellung des Pendelkörpers 4 bezüglich des Gehäuses 1, wobei ausgehend von einer vorgegebenen Nullstellung lediglich die Steuersignale für die Wicklungen 9 ausgezählt werden. Hierfür ist ein einfacher, hier nicht dargestellter Nullstellungsabgriff vorgesehen. Am unteren Ende des Pendelkörpers 4 ist ein elektrisch ansteuerbarer Lotmagnet 16 vorgesehen, dessen als sogenannter »Trampelfuß« ausgebildeter Anker 17 sich auf einem kalottenförmigen Teil 18 des Gehäuses 1 abstützt. Es ist ersichtlich, daß somit für den kardanisch aufgehängten Pendelkörper 4 eine Loteinrichtung geschaffen ist. Ist nämlich abweichend von Fig. 1 die Hochachse 19 nicht vertikal ausgerichtet, so kann durch eine im Taktbetrieb erfolgende Ansteuerung des Lotmagneten 16 der Anker 17 von der Kalotte abheben, mit der Folge, daß der Pendelkörper 4 sich exakt vertikal ausrichtet. Selbstverständlich kann die Lotung auch über Lotfühler sowie durch diese gesteuerte Stellglieder, wie zum Beispiel Servomotoren oder Drehmomenterzeuger, durchgeführt werden.

Innerhalb des Pendelkörpers 4 befindet sich der Präzessionsrahmen 20, welcher einen um die Spinachse 21 drehbaren Kreiselmotor 32/33 enthält. Der Rahmen 20 ist gegenüber dem Pendelkörper 4 bzw. Nachführrahmen mittels einer statischen Gaslagerung, enthaltend ringförmige Axial- und Radialluftspalte 24, 25, um die Ausgangs- bzw. Drehachse 13 drehbar gelagert. Zur Speisung der Lagerung ist im unteren Teil des Pendelkörpers 4 ein schematisch angedeuteter Verdichter 27 vorgesehen. Es ist weiterhin ein Winkelstellungsabgriff und ein Drehmomenterzeuger 30, 31 vorgesehen. Hiermit wird einerseits die Winkelstellung des Rahmens 20 bzw. der Spinachse 22 bezüglich des Pendelkörpers 4 abgegriffen und andererseits ist ein Fesselmoment um die Drehachse 13 erzeugbar zur Fesselung des Rahmens 20 an eine vorgegebene Nullstellung. Als Antrieb des Kreiselrotors 22 ist ein Motor 32, 33 vorgesehen, welcher bevorzugt als bürstenloser Gleichstrommotor ausgebildet ist. Es sind ferner zwischen Pendelkörper 4 und Rahmen 20 schematisch dargestellte Stromzuführungsfedern 36 vorhanden. Die gesamte zur Durchführung der Nordung erforderliche Elektronik 37 einschließlich Rechner, Microprozessor, Zähler und Stromversorgung, ist im oberen Teil des Kreisels auf der Grundplatte 2 angeordnet. Der Funktionsablauf einer Nordung sowie die hierbei durchzuführenden Steuerungs- und Rechenschritte werden nunmehr beschrieben. Durch einen externen Nordsuchbefehl wird zunächst der Kreisel eingeschaltet. Zur Lotung des Pendelkörpers 4 wird der Lotmagnet 16 mit Impulsen erregt und nach wenigen Sekunden ist die Ausgangs- oder Drehachse 13 exakt vertikal ausgerichtet. Nun erfolgt der Hochlauf des Kreiselrotors 21 auf Nenndrehzahl und gleichzeitig wird der Schrittmotor 5 schnell durchgedreht, damit bei Überschreiten der Nullstellung der Zähler gelöscht wird und nachfolgend der Zählerstand der Winkelstellung des Pendelkörpers entspricht. Es ist zweckmäßig, bereits während des Hochlaufes den Fesselkreis, welcher aus Winkelstellungsabgriff und Drehmomenterzeuger 30, 31 besteht, zu schließen. Sobald der Kreiselrotor 22 seine Nenndrehzahl erreicht hat, wird in der gerade eingenommenen ersten Stellung des Kreisels das Fesselmoment bzw. unter Berücksichtigung des Kreiseldralls die Eingangs-Winkelgeschwindigkeit $\omega_1$ gemessen. Sodann wird der Pendelkörper 4 mittels des Schrittmotors um einen Winkel von 90° um die Drehachse 13 geschwenkt und in einer zweiten Messung die Eingangswinkelgeschwindigkeit $\omega_2$ gemessen. Die Ausführung einer genauen 90°-Drehung wird durch eine definierte Impulsabgabe des Rechners an den Schrittmotor erreicht. In gleicher Weise wird nach zwei weiteren Drehungen um jeweils 90° $\omega_3$ und $\omega_4$ gemessen. Die Messung der Eingangswinkelgeschwindigkeit erfolgt in jeder Stellung über einen bestimmten Zeitraum mehrfach, so daß nach Umformung dieser Werte in die Ausgangsgrößen gemittelte Werte $\overline{X}_{1-4}$ zur Verfü-

4

gung stehen. Mit diesen Meßwerten wird nach der Formel (5) im Rechner die Nordrichtung bzw. der zwischen Nullmarke und Nord bestehende Winkel $\gamma$ ermittelt. Desweiteren ermittelt der Rechner unter Berücksichtigung des beispielsweise manuell eingegebenen Wertes $\Omega_H$ nach der Formel (6) den Skalenfaktor K und nach Formel (7) den konstanten Meßfehler B. Aus den beiden Werten K und B wird die Kreiseldrift D nach Formel (8) berechnet. Der Aufbau oder die Programmierung des Rechners zur Durchführung der vorerwähnten Operation ist dem Fachmann geläufig und daher hier nicht im einzelnen beschrieben. Die Meßwerte K, B, D werden nach der ersten Messung in den Rechner eingespeichert und bei gelegentlich durchzuführenden Kalibrationsmessungen korrigiert, so daß bei nachfolgenden Nordmessungen durch die Berücksichtigung der aktuellen Fehlergrößen eine präzise Ermittlung der Nordrichtung durchführbar ist.

**Patentansprüche**

1. Verfahren zur Ermittlung der Nordrichtung mittels eines nordsuchenden Kreisels, enthaltend in einem inneren Rahmen einen Kreiselmotor mit horizontal ausrichtbarer Spinachse, einen äußeren Rahmen bzw. Pendelkörper, in welchem der innere Rahmen um eine vertikal ausrichtbare Drehachse drehbar angeordnet ist, eine Loteinrichtung zur vertikalen Ausrichtung des insbesondere mittels Kardangelenk in einem Gehäuse aufgehängten und drehbaren Pendelkörpers, eine Fesseleinrichtung mit einem ein Signal erzeugenden Abgriff für die Winkelstellung des inneren Rahmens gegenüber dem Pendelkörper in Bezug auf eine vorgegebene Nullwinkelstellung und einem vom Abgriffsignal gesteuerten Drehmomenterzeuger zur Fesselung des inneren Rahmens in seiner Nullwinkelstellung, wobei der Strom im Drehmomenterzeuger ein Maß für das die Kreiselspinachse nach Nord treibende Moment, verursacht durch die Eingangswinkelgeschwindigkeit, darstellt und ein Stellglied, insbesondere einen Schrittmotor, der eine Verdrehung des Pendelkörpers gegenüber dem Gehäuse in Bezug auf eine vorgegebene Nullverdrehung bewirkt, wobei dieses Gehäuse eine Nullmarke zur Bestimmung der Nordrichtung, d. h. des zwischen der Nullmarke und Nord bestehenden Winkels $\gamma$ aufweist, dadurch gekennzeichnet, daß zur Ermittlung des Winkels $\gamma$ mindestens drei Messungen von der Eingangswinkelgeschwindigkeit $\omega$ abhängigen Ausgangsgröße $\overline{X}_i$ in verschiedenen gegenüber der Nullverdrehung um definierte Winkel $\alpha_i$ verdrehten Stellungen des Pendelkörpers vorgenommen werden und daß aus den Gleichungen $\overline{X}_i = k\,[\Omega_H \sin\,(\gamma + \alpha_i) + D]$ der Winkel $\gamma$ errechnet wird, wobei $\Omega_H$ die Horizontalkomponente der Erddrehgeschwindigkeit, D die Kreiseldrift und K der Skalenfaktor ist.

2. Verfahren nach Anspruch 1, dadurch gekennzeichnet, daß aus den Ausgangsgrößen $\overline{X}_i$ der Messungen ein Skalenfaktor K und/oder ein konstanter Meßfehler B und/oder die Kreiseldrift D ermittelt wird.

3. Verfahren nach Anspruch 1 oder 2, dadurch gekennzeichnet, daß die Messungen der Eingangswinkelgeschwindigkeit in jeweils 120° zueinander verdrehten Stellungen erfolgen und daraus die Ausgangsgrößen $\overline{X}_1$, $\overline{X}_2$, $\overline{X}_3$ gebildet werden, wobei die Nordrichtung bezogen auf eine Nullmarke nach der Beziehung

$$\gamma = \arctan \frac{2\,\overline{X}_1 - \overline{X}_2 - \overline{X}_3}{(\overline{X}_2 - \overline{X}_3)\,\sqrt{3}}$$

und/oder der Skalenfaktor

$$K = \frac{2}{3\,\Omega_H}\,\sqrt{\overline{X}_1^2 + \overline{X}_2^2 + \overline{X}_3^2 - \overline{X}_1\overline{X}_2 - \overline{X}_2\overline{X}_3 - \overline{X}_1\overline{X}_3}$$

und/oder der konstante Meßfehler

$$B = \frac{1}{3}\,(\overline{X}_1 + \overline{X}_2 + \overline{X}_3)$$

und/oder aus den Werten K und B die Kreiseldrift

$$D = \frac{B}{K}$$

ermittelt wird.

4. Verfahren nach Anspruch 1 oder 2, dadurch gekennzeichnet, daß die Messungen der Eingangswinkelgeschwindigkeit in vier um 90° zueinander verdrehten Stellungen erfolgen und daraus die Ausgangsgrößen $\overline{X}_1$, $\overline{X}_2$, $\overline{X}_3$, $\overline{X}_4$ gebildet werden, wobei die Nordrichtung, bezogen auf eine Nullmarke, nach der Beziehung

$$\gamma = \arctan \frac{\overline{X}_1 - \overline{X}_3}{\overline{X}_2 - \overline{X}_4}\,.$$

und/oder der Skalenfaktor

$$K = \frac{1}{2\,\Omega_H} \; \sqrt{(\overline{X}_1 - \overline{X}_3)^2 + (\overline{X}_2 - \overline{X}_4)^2}$$

und/oder der konstante Meßfehler

$$B = \frac{1}{4}(\overline{X}_1 + \overline{X}_2 + \overline{X}_3 + \overline{X}_4)$$

und/oder aus den Werten K und B die Kreiseldrift

$$D = \frac{B}{K}$$

ermittelt wird.

5. Verfahren nach Anspruch 4, dadurch gekennzeichnet, daß bereits nach dem Erhalten der ersten zwei Ausgangsgrößen $\overline{X}_1$ und $\overline{X}_2$ ein erster grober Wert für die Nordrichtung nach der Beziehung

$$\gamma_G = \arctan \frac{\overline{X}_1}{\overline{X}_2}$$

ermittelt wird.

6. Verfahren nach einem der Ansprüche 1 bis 5, dadurch gekennzeichnet, daß die Nullmarke des nordsuchenden Kreisels vor den Messungen exakt nach Nord ausgerichtet wird und daß die aus den Ausgangsgrößen ermittelte Abweichung von der Nordrichtung als Kalibrationswert Z gegenüber der Nullmarke abgespeichert und bei jeder nachfolgenden Nordung berücksichtigt wird.

7. Verfahren nach einem der Ansprüche 2 bis 6, dadurch gekennzeichnet, daß eine oder mehrere der ermittelten Größen, K, B, D oder Z, in einem digitalen Speicher abgespeichert werden und dieser Speicher auch nach Austausch des Kreisels, z. B. aus einer Navigationsanlage diesem zugeordnet bleibt.

8. Verfahren nach einem der Ansprüche 2 bis 6, dadurch gekennzeichnet, daß eine oder mehrere der Größen K, D, B oder Z bei verschiedenen Temperaturen ermittelt und daraus ihr Temperaturkoeffizient berechnet und im Rechner gespeichert wird.

9. Verfahren nach Anspruch 8, dadurch gekennzeichnet, daß bei nachfolgenden Nordungen mit Hilfe eines Temperaturfühlers die Temperatur gemessen und mit den gespeicherten Größen K, D, B und Z sowie deren Temperaturkoeffizienten der durch diese Größen verursachte Nordungsfehler rechnerisch kompensiert wird.

## Claims

1. A method of determining the north direction by means of a north-seeking gyroscope containing, in an inner frame, a gyroscope motor with a spin axis which can be aligned horizontally, an outer frame or pendulum member in which the inner frame is disposed for rotation about an axis of rotation which can be aligned vertically, a verticality device for the vertical alignment of the rotatable pendulum member which is suspended in a housing, particularly by means of a universal joint, a restraining device with a signalproducing pick-up for the angular position of the inner frame in relation to the pendulum member with respect to a preset zero angular position and a torque producer, controlled by the pick-up signal, to restrain the inner frame in its zero angular position, the current in the torque producer representing a measure of the moment driving the spin axis of the gyroscope towards the north and caused by the input angular velocity, and a regulating element, particularly a stepping motor, which causes a rotation of the pendulum member in relation to the housing with reference to a preset zero rotation, this housing comprising a zero mark for determination of the north direction, this is to say of the angle $\gamma$ existing between the zero mark and north, characterised in that, in order to determine the angle $\gamma$, at least three measurements of an output quantity $\overline{X}_i$ depending on the input angular velocity $\omega$ are carried out in different positions of the pendulum member, turned through defined angles $\alpha_i$ in relation to the zero rotation, and that the angle $\gamma$ is calculated from the equations $\overline{X}_i = K[\Omega_H \sin(\gamma + \alpha_i) + D]$, in which $\Omega_H$ is the horizontal component of the speed of rotation of the earth, D is the gyroscope drift and K is the scale factor.

2. A method as claimed in Claim 1, characterised in that a scale factor K and/or a constant measuring error B and/or the gyroscope drift D is determined from the output quantities $\overline{X}_i$ of the measurements.

3. A method as claimed in Claim 1 or 2, characterised in that the measurement of the input angular velocity are each effected in positions turned through 120° in relation to one another and from them the output quantities $\overline{X}_1$, $\overline{X}_2$, $\overline{X}_3$ are formed, the north direction being determined in relation to a zero mark according to the equation

$$y = \arctan \frac{2\,\overline{X}_1 - \overline{X}_2 - \overline{X}_3}{(\overline{X}_2 - \overline{X}_3)\,\sqrt{3}}$$

and/or the scale factor

$$K = \frac{2}{3\,\Omega_H}\,\sqrt{\overline{X}_1^2 + \overline{X}_2^2 + \overline{X}_3^2 - \overline{X}_1\,\overline{X}_2 - \overline{X}_2\,\overline{X}_3 - \overline{X}_1\,\overline{X}_3}$$

and/or the constant measuring error

$$B = \frac{1}{3}\,(\overline{X}_1 + \overline{X}_2 + \overline{X}_3)$$

and/or the gyroscope drift from the values K and B

$$D = \frac{B}{K}.$$

4. A method as claimed in Claim 1 or 2, characterised in that the measurement of the input angular velocity are effected in four positions turned through 90° in relation to one another and from them the output quantities $\overline{X}_1$, $\overline{X}_2$, $\overline{X}_3$, $\overline{X}_4$ are formed, the north direction being determined in relation to a zero mark, according to the equation

$$y = \arctan \frac{\overline{X}_1 - \overline{X}_3}{\overline{X}_2 - \overline{X}_4}$$

and/or the scale factor

$$K = \frac{1}{2\,\Omega_H}\,\sqrt{(X_1 - X_3)^2 + (X_2 - X_4)^2}$$

and/or the constant measuring error

$$B = \frac{1}{4}\,(\overline{X}_1 + \overline{X}_2 + \overline{X}_3 + \overline{X}_4)$$

and/or the gyroscope drift from the values K and B

$$D = \frac{B}{K}.$$

5. A method as claimed in Claim 4, characterised in that after obtaining the first two output quantities $\overline{X}_1$ and $\overline{X}_2$, a first rough value for the north direction is determined from the equation

$$y_G = \arctan \frac{\overline{X}_1}{\overline{X}_2}.$$

6. A method as claimed in any one of Claims 1 to 5, characterised in that the zero mark of the north-seeking gyroscope is aligned precisely towards the north before the measurement and that the deviation from the north direction found from the output quantities is stored as a calabration value Z in relation to the zero mark and is taken into consideration during each successive orientation to the north.

7. A method as claimed in any one of Claims 2 to 6, characterised in that one or more of the quantities determined, K, B, D or Z are stored in a digital memory and even after the exchange of the gyroscope, for example out of a navigation installation, the memory remains allocated thereto.

8. A method as claimed in any one of Claims 2 to 6, characterised in that one or more of the quantities K, D, B or Z is determined at different temperatures and from this its temperature coefficient is calculated and stored in the computer.

9. A method as claimed in Claim 8, characterised in that during subsequent orientations to the north, the temperature is measured by means of a temperature sensor and the north orientation error caused by the quantities K, D, B and Z is compensated for by computation with the stored quantities K, D, B and Z and their temperature coefficients.

**0 056 447**

## Revendications

1. Procédé pour déterminer la direction du nord au moyen d'un compas gyroscopique, contenant dans un cadre intérieur en moteur de toupie dont l'axe de rotation peut être aligné sur l'horizontale, un cadre extérieur formant pendule, dans lequel le cadre intérieur est monté rotatif autour d'un axe de rotation qui peut être aligné sur la verticale, un dispositif de détection de la verticale ou érecteur pour l'orientation verticale du pendule, lequel est rotatif et suspendu dans un boîtier, en particulier par cardan, un dispositif de blocage avec un capteur générateur de signal pour la position angulaire du cadre intérieur vis-à-vis du pendule par rapport à une position angulaire zéro préfixée et un moteur-couple commandé par le signal du capteur pour bloquer le cadre intérieur à sa position angulaire nulle, le courant dans le moteur-couple représentant une mesure du couple, provoqué par la vitesse angulaire d'entrée, dirigeant l'axe de rotation de la toupie vers le nord, ainsi qu'un organe d'asservissement, en particulier un moteur pas à pas, qui produit une rotation du pendule vis-à-vis du boîtier par rapport à un décalage angulaire préfixé du zéro, ce boîtier présentant un index zéro pour la détermination de la direction du nord, c'est-à-dire de l'angle entre l'index zéro et le nord, caractérisé en ce que, pour déterminer l'angle $\gamma$, on effectue au moins trois mesures d'une grandeur de sortie, $\overline{X}_i$, dépendante de la vitesse angulaire d'entrée $\omega$, en différentes positions du pendule tournées d'angles $\alpha_i$ définis par rapport au décalage du zéro et que l'on calcule l'angle $\gamma$ à l'aide des équitations $\overline{X}_i = k\,[\Omega_H \sin (\gamma + \alpha_i) + D]$, où $\Omega_H$ est la composante horizontale de la vitesse de rotation terrestre, D la dérive gyroscopique et K le facteur de cadrage.

2. Procédé selon la revendication 1, caractérisé en ce que l'on détermine un facteur de cadrage K et/ou une erreur de mesure constante R et/ou la dérive gyroscopique D a partir des grandeurs de mesure $\overline{X}_i$ des mesures.

3. Procédé selon la revendication 1 ou 2, caractérisé en ce que l'on effectue les mesures de la vitesse angulaire d'entrée à des positions mutuellement décalées chaque fois de 120°, on tire les grandeurs de sortie de ces mesures $\overline{X}_1$, $\overline{X}_2$, $\overline{X}_3$, et on détermine la direction du nord par rapport à un index zéro selon

$$\gamma = tg\ \frac{2\,\overline{X}_1 - \overline{X}_2 - \overline{X}_3}{(\overline{X}_2 - \overline{X}_3)\,\sqrt{3}}$$

et/ou le facteur de cadrage selon

$$K = \frac{2}{3\,\Omega_H}\ \sqrt{\overline{X}_1^2 + \overline{X}_2^2 + \overline{X}_3^2 - \overline{X}_1\,\overline{X}_2 - \overline{X}_2\,\overline{X}_3 - \overline{X}_1\,\overline{X}_3}$$

et/ou l'erreur de mesure constante selon

$$B = \frac{1}{3}\,(\overline{X}_1 + \overline{X}_2 + \overline{X}_3)$$

et/ou, à partir des valeurs K et B, la dérive gyroscopique selon

$$D = \frac{B}{K}.$$

4. Procédé selon la revendication 1 ou 2, caractérisé en ce que l'on effectue les mesures de la vitesse angulaire d'entrée à quatre positions mutuellement décalées chaque fois de 90°, on tire de ces mesures les grandeurs de sortie $\overline{X}_1$, $\overline{X}_2$, $\overline{X}_3$, $\overline{X}_4$ et on détermine la direction du nord par rapport à un index zéro selon

$$\gamma = tg\ \frac{\overline{X}_1 - \overline{X}_3}{\overline{X}_2 - \overline{X}_4}$$

et/ou le facteur de cadrage selon

$$K = \frac{1}{2\,\Omega_H}\ \sqrt{(\overline{X}_1 - \overline{X}_3)^2 + (\overline{X}_2 - \overline{X}_4)^2}$$

et/ou l'erreur de mesure constante selon

$$B = \frac{1}{4}\,(\overline{X}_1 + \overline{X}_2 + \overline{X}_3 + \overline{X}_4)$$

et/ou, à partir des valeurs K et B, la dérive gyroscopique selon

$$D = \frac{B}{K}.$$

8

**0 056 447**

5. Procédé selon la revendication 4, caractérisé en ce que, dès l'obtention des deux premières grandeurs de sortie $\overline{X}_1$ et $\overline{X}_2$, on détermine une première valeur approximative pour a direction du nord selon

$$\gamma_G = \mathrm{tg}\ \frac{\overline{X}_1}{\overline{X}_2}\ .$$

6. Procédé selon une des revendications 1 à 5, caractérisé en ce que, avant les mesures, on oriente l'index zéro du compas gyroscopique exactement sur le nord, on mémorise l'écart par rapport à la direction du nord, déterminé à partir des grandeurs de sortie, en tant que valeur de calibrage Z par rapport à l'index zéro et l'on tient compte de cette valeur de calibrage lors de chaque détermination du nord suivante.

7. Procédé selon une des revendications 2 à 6, caractérisé en ce que l'on mémorise une ou plusieurs des grandeurs déterminées, K, B, D ou Z, dans une mémoire numérique qui reste associée au compas, même s'il est retiré d'une installation de navigation par exemple, en vue d'un remplacement.

8. Procédé selon une des revendications 2 à 6, caractérisé en ce que l'on détermine une ou plussieurs des grandeurs K, D, B ou Z à différentes températures, on en tire leur coefficient de température et on mémorise ce coefficient dans le calculateur.

9. Procédé selon la revendication 8, caractérisé en ce que, lors de déterminations ultérieures du nord, on mesure la température à l'aide d'un capteur de température et, au moyen des grandeurs K, D, B et Z et de leurs coefficients de température mémorisés, on compense par le calcul l'erreur de détermination du nord provoquée par eux.

9

FIG.1